# EUROPEAN PATENT APPLICATION

(11) **EP 4 080 455 A1**
(43) Date of publication of application: **26.10.2022**
(21) Application number: 22167154.8
(22) Date of filing: 07.04.2022
(51) Int. Cl.: G06T 7/33, G06T 7/70

(54) **ALIGNMENT OF MAP SEGMENTS**

(30) Priority: 22.04.2021 GR 20210100286; 13.05.2021 GB 202106811
(71) Applicant: Navenio Ltd, Oxford Oxfordshire OX1 1PT (GB)
(72) Inventor: Trigoni, Agathoniki, Oxford, OX1 1PT (GB); Nawaz, Muhammad Sarfraz, Oxford, OX1 1PT (GB); Maguire, Sean Thomas George, Oxford, OX1 1PT (GB); Broadway, Matthew David, Oxford, OX1 1PT (GB)
(74) Representative: Barker Brettell LLP

(57) **Abstract**

A computer implemented method (100) of aligning a plurality of map segments (5a, 5a', 5b, 5b', 5c, 5d, 5e, 5f, 502a, 502b) having a local reference frame to a reference map (1, 1', 500) having a global reference frame, each map segment (5a, 5a', 5b, 5b', 5c, 5d, 5e, 5f, 502a, 502b) overlapping a portion of the area represented by the reference map, the method (100) comprising: for each map segment (5a, 5a', 5b, 5b', 5c, 5d, 5e, 5f, 502a, 502b), independently generating (102) one or more candidate alignments (13a', 13a", 13a‴, 13b', 13b", 13b‴, 504a', 504a", 504a‴, 504b', 504b", 504b‴), aligning the map segment (5a, 5a', 5b, 5b', 5c, 5d, 5e, 5f, 502a, 502b) to the reference map (1, 1', 500); for each candidate alignment (13a', 13a", 13a‴, 13b', 13b", 13b‴, 504a', 504a", 504a‴, 504b', 504b", 504b‴), evaluating (104) a candidate alignment cost function representing the likelihood that the candidate alignment (13a', 13a", 13a‴, 13b', 13b", 13b‴, 504a', 504a", 504a‴, 504b', 504b", 504b‴) is correct; based on the candidate alignments (13a', 13a", 13a‴, 13b', 13b", 13b‴, 504a', 504a", 504a‴, 504b', 504b", 504b"') and associated candidate alignment cost functions, generating (108) one or more candidate solutions (15a, 15b, 15c, 15d, 506a, 506b, 506c, 506d), each candidate solution (15a, 15b, 15c, 15d, 506a, 506b, 506c, 506d) comprising a single candidate alignment (13a', 13a", 13a‴, 13b', 13b", 13b‴, 504a', 504a", 504a"', 504b', 504b", 504b‴) for each map segment ( 5a, 5a', 5b, 5b', 5c, 5d, 5e, 5f, 502a, 502b) of the plurality of map segments (5a, 5a', 5b, 5b', 5c, 5d, 5e, 5f, 502a, 502b); for each candidate solution (15a, 15b, 15c, 15d, 506a, 506b, 506c, 506d), evaluating (110) a candidate solution cost function based on at least the candidate alignment cost functions for each candidate alignment (13a', 13a", 13a‴, 13b', 13b", 13b‴, 504a', 504a", 504a‴, 504b', 504b", 504b‴) included in the candidate solution (15a, 15b, 15c, 15d, 506a, 506b, 506c, 506d); and based on the evaluation of the candidate solution cost functions, determining the alignment of the plurality of map segments (5a, 5a', 5b, 5b', 5c, 5d, 5e, 5f, 502a, 502b) to the reference map (1, 1', 500).

## Description

The present disclosure relates to a computer implemented method aligning a plurality of map segments to a common reference frame. The present disclosure also relates to a system for performing the method.

In many different scenarios, it is desirable to have a single coherent floor plan of a large area or region. For example, this may be of use in mapping, pedestrian tracking, automated control of vehicles and other robots and other applications. However, such detailed floor plans often do not exist.

Large and complex sites such as hospitals, airports, shopping centre and the like may have multiple buildings with multiple floors for each building. Whilst outline maps of the whole site and detailed floor plans of certain areas may exist, the detailed floor plans do not cover the whole area and are often not aligned to each other or the larger map. Therefore, there is typically no single coherent detailed floorplan that covers the entire site, and generating such a map may require the processing of tens or hundreds of separate floorplans, each showing a part of the site.

According to a first aspect of the invention, there is provided a computer implemented method of aligning a plurality of map segments having a local reference frame to a reference map having a global reference frame, each map segment overlapping a portion of the area represented by the reference map, the method comprising: for each map segment, independently generating one or more candidate alignments aligning the map segment to the reference map; for each candidate alignment, evaluating a candidate alignment cost function representing the likelihood that the candidate alignment is correct; based on the candidate alignments and associated candidate alignment cost functions, generating one or more candidate solutions, each candidate solution comprising a single candidate alignment for each map segment of the plurality of map segments; for each candidate solution, evaluating a candidate solution cost function based on at least the candidate alignment cost functions for each candidate alignment included in the candidate solution; and based on the evaluation of the candidate solution cost functions, determining the alignment of the plurality of map segments to the reference map.

At least some of the plurality of map segments may have different reference frames.

Independently generating one or more candidate alignments for each map segment may comprise: aligning one or more node points or edges on the map segment with one or more node points or edges on the reference map. Independently generating one or more candidate alignments for each map segment may comprise: applying one or more of a shape matching algorithm or a graph matching algorithm.

Evaluating a candidate alignment cost function for each candidate alignment may comprise: determining a degree of alignment between node points and edges on the map segment and node points and edges on the reference map; and determining the cost function based on the determined degree of alignment.

Independently generating one or more candidate alignments for each map segment may comprise applying a transformation to distort to the map segment. Evaluating a candidate alignment cost function for each candidate alignment may comprise: determining a cost function contribution corresponding to a distortion of the map segment in the candidate alignment. The transformation may apply a scaling.

Generating one or more candidate solutions may comprise ignoring candidate alignments of map segments with a cost function value exceeding a threshold.

Evaluating a candidate solution cost function for each candidate solution may comprise determining an overlap of different map segments and determining a cost function contribution based on the overlap.

Generating one or more candidate solutions may comprise identifying a sub-set of all possible combinations of the candidate alignments. Generating one or more candidate solutions may comprise: identifying a first candidate solution; identifying further candidate solutions based on the first candidate solution.

Identifying further candidate solutions based on the first candidate solution may comprise using a discrete global optimisation algorithm, such as genetic algorithms, simulated annealing, tabu search.

Identifying further candidate solutions based on the first candidate solution may comprise changing a sub-set of the candidate alignments in the first candidate solution for different candidate alignments for the same map segment. The candidate alignments with the highest cost function may be changed.

The step of generating one or more candidate solutions may be terminated once a termination criteria is met. Any suitable termination criteria may be used.

The first candidate solution may comprise the candidate alignment with the lowest value cost function for each map segment.

The method may comprise simplifying the shape of map segments prior to determining candidate alignments.

The method may comprise determining that one or more map segments overlap and merging overlapping map segments to form a single map segment.

The method may comprise transforming two or more reference maps to align to each other in a single global frame of reference.

Determining the alignment of the plurality of map segments to the reference map may comprise providing a sub-set of the candidate solutions having the lowest cost function value.

Determining the alignment of the plurality of map segments to the reference map may comprise aligning some but not all of the map segments to the reference map.

The reference map may comprise a map with one or more points having a position defined in a Global Navigation Satellite System or a pose graph of trajectories along which one or more mobile devices is moved.

According to a second aspect of the invention, there is provided: a data processing system for aligning a plurality of map segments having a local reference frame to a reference map having a global reference frame, each map segment overlapping a portion of the area represented by the reference map, the data processing system comprising: processing circuitry arranged to perform the method of the first aspect.

According to a third aspect of the invention, there is provided a computer-readable medium containing instructions which, when run on a system including processing circuitry, cause that system to:
(i) perform the method of the first aspect; and/or
(ii) implement the data processing system of the second aspect.

Aspects of the invention provide an output that combines multiple separately defined detailed floor plans covering a portion of a site, to generate a single detailed floor plan covering part or all of the site (where the part of the site covered is larger than the portion covered by any single floor plan segment). Furthermore, according to various aspects, the detailed floor plan is provided in a quick and efficient manner.

It will be appreciated that, unless mutually exclusive, features described in relation to a particular aspect of the invention may be applied to any other aspect.

Embodiments of the invention will now be described, by way of example only, with reference to the accompanying drawings, in which:
**Figure 1A** illustrates an example of a reference map;
**Figure 1B** illustrates an example of detailed floorplan map segments;
**Figure 1C** illustrates an alternative example of a reference map, used for illustrating the method of Figure 2
**Figure ID** illustrates example map segments for alignment to the reference map of Figure 1;
**Figure 1E** illustrates examples of candidate alignments of the individual map segments of Figure 1D to the reference map of Figure 1C;
**Figure 1F** illustrates examples of candidate solutions including both the map segments of Figure 1D to the reference map of Figure 1C;
**Figure 2** illustrates a flow chart showing an example method of aligning the map segments of Figure 1B;
**Figure 3** illustrates a flow chart of a corner matching algorithm to generate candidate alignments of a map segment;
**Figure 4** illustrates a flow chart of a search algorithm used to identify candidate solutions;
**Figure 5A** illustrates a pose graph forming a reference map, the pose graph corresponding to the area shown by the map in Figure 1C;
**Figure 5B** illustrates a skeleton experience map extracted from the pose graph of Figure 5A;
**Figure 5C** illustrates skeleton map segments extracted from the map segments shown in Figure 1D;
**Figure 5D** illustrates examples of candidate alignments of the skeleton map segments to the skeleton pose graph;
**Figure 5E** illustrates examples of candidate solutions including both the skeleton map segments of Figure 5C aligned to the skeleton reference map of Figure 5B;
**Figure 6** illustrates a flow chart of an anchor matching algorithm to generate candidate alignments of a map segment to a pose graph reference map;
**Figure 7** illustrates a flow chart of a first pre-processing procedure for processing reference maps;
**Figure 8** illustrates a flow chart of a second pre-processing procedure for processing reference maps;
**Figure 9** illustrates a flow chart of a pre-processing procedure for processing map segments;
**Figure 10A** illustrates a flow chart of a process for generating a simplified outline polygon of a map segment;
**Figure 10B** illustrates an example of a map segment; and
**Figure 11** illustrates a data processing system for performing the method of Figure 2.

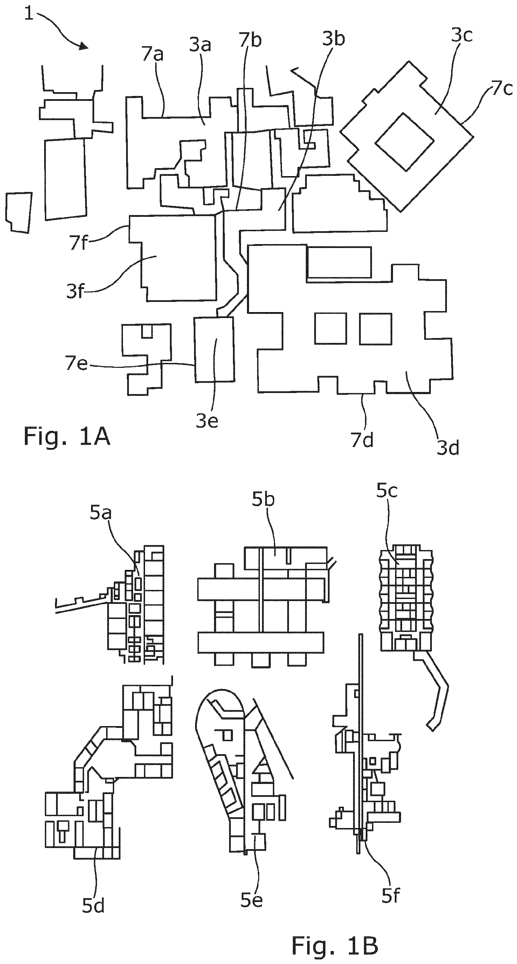

Figure 1A illustrates a map 1 of a site such as a hospital, airport, shopping centre or the like. The map 1 shows a number of different buildings or areas 3a, 3b, 3c, 3d, 3e, 3f in outline only. The different buildings or areas 3a, 3b, 3c, 3d, 3e, 3f may be interconnected by, for example, doorways, walkways or paths and the like. Alternatively, the areas 3a, 3b, 3c, 3d, 3e, 3f may be separate to each other.

The different buildings or areas 3a, 3b, 3c, 3d, 3e, 3f are defined by outline polygons 7a, 7b, 7c, 7d, 7e, 7f showing an outline shape. The polygons 7a, 7b, 7c, 7d, 7e, 7f may be defined in a number of different ways in the reference frame of the map 1. For example, the polygons may be defined by a number of line segments extending between fixed co-ordinates or extending from an origin co-ordinate for a fixed length. Alternatively, the polygons may be defined as line segments extending between defined node points. It will be appreciated that the polygons may be defined in any suitable manner.

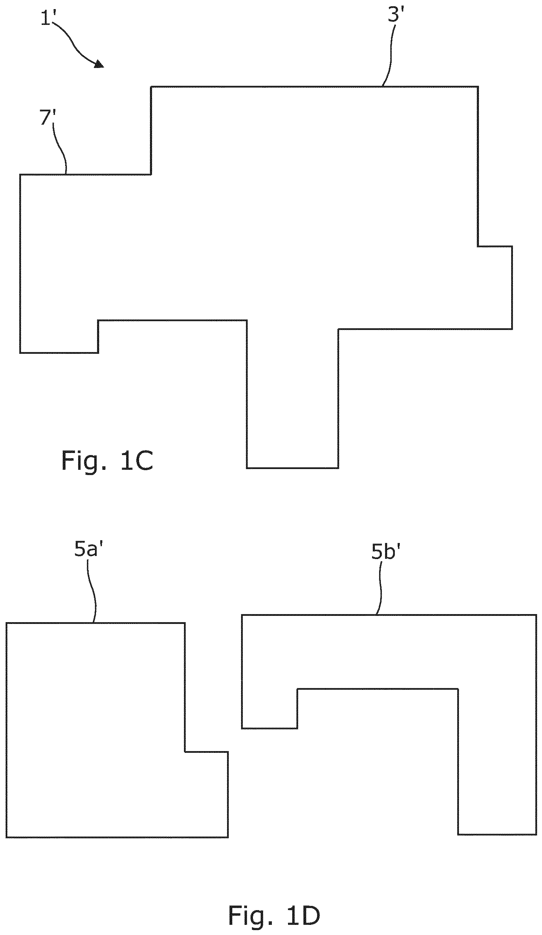

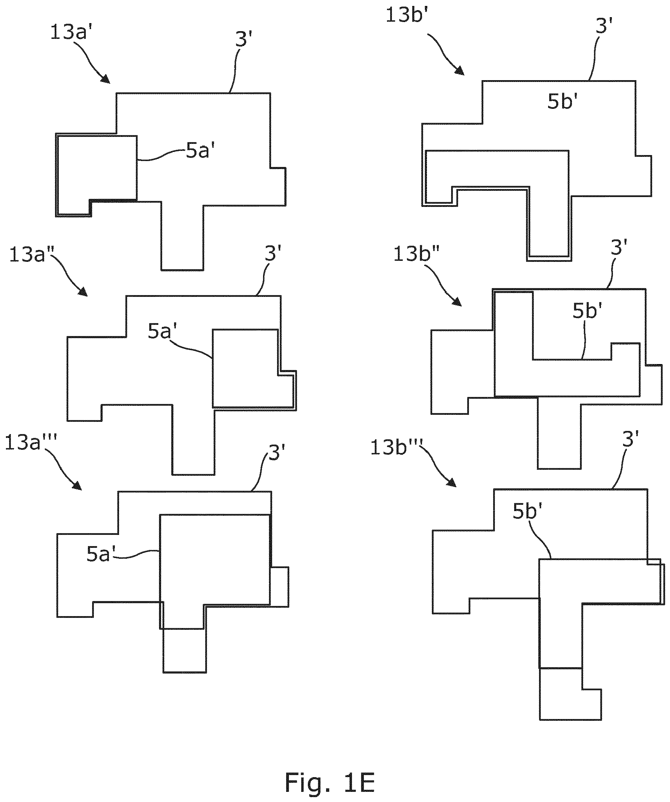

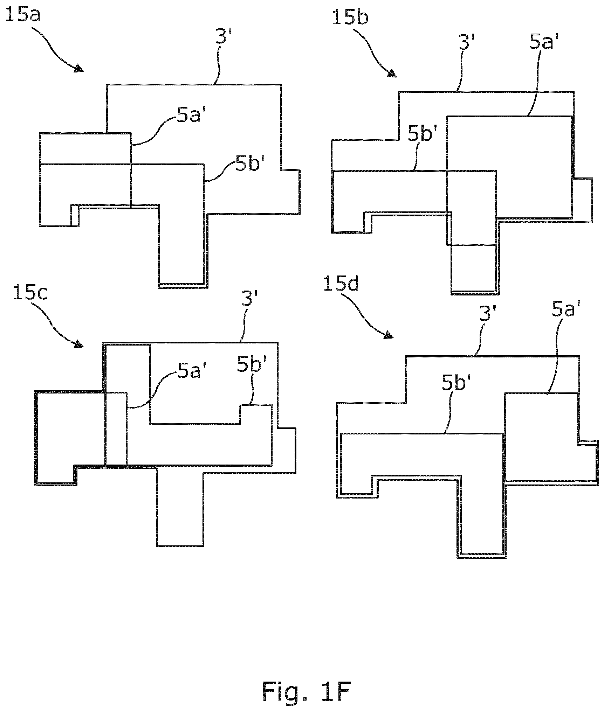

The map 1 shown in Figure 1 may also be defined within a global reference frame, such as the reference frame defined by a Global Navigation Satellite System (GNSS). This may be, for example, the Global Positioning System (GPS), Global Navigation Satellite System (GLONASS), Galileo or BeiDou Navigation Satellite System (BDS).

In order to define the map 1 within the global reference frame, at least one point on the map will have an associated GNSS position. However, it will be appreciated that two or more points may have associated GNSS positions. The definition of the GNSS position thus allows the map to be placed within the reference frame of the Earth and thus the map 1 may be considered a reference map.

The GNSS position may be defined as a single point along a line segment, at a vertex between line segments, or at a node on the map 1. Alternatively, the GNSS position may be defined away from a polygon, but in a defined relationship with the polygon. For example, the GNSS position may be defined at the centre of a polygon or at a defined offset from a polygon.

As will be discussed below in more detail, the map 1 is stored in a computer system as map data. The map data may be stored in any suitable format, along with the GNSS information. The map data may also include tags or flags or other data indicating other features. For example, the data may include names or labels for areas or buildings 3a,3b,3c,3d,3e,3f, a note where a building has multiple floors, information in ingress/egress points and the like.

The reference map 1 can be obtained from a number of sources. For example, the reference map may be obtained from Google Maps, OpenStreetMap, or any other publicly available or open source map. For example, OpenStreetMaps has an application programming interface that allows the user to obtain building outlines/polygons in a defined region of interest. Alternatively, the reference map 1 can be obtained from a user input or the like.

Figure 1B illustrates a number of separate map segments 5a, 5b, 5c, 5d, 5e, 5f. The map segments 5a, 5b, 5c, 5d, 5e, 5f show a detailed plan of an area. For example, the map segments may show the detailed interior structure of a building, showing internal walls, corridors, doorways and other features.

As with the reference map 1, the map segments 5a, 5b, 5c, 5d, 5e, 5f may be defined in any suitable way, such as line segments, vertices joined by line segments or polygons.

In the example being discussed, the map segments 5a, 5b, 5c, 5d, 5e, 5f do not include any GNSS information allowing them to be defined relative to the reference map 1. Instead, each of the map segments 5a, 5b, 5c, 5d, 5e, 5f is defined in its own reference frame, independent of the reference frame of the other map segments 5a, 5b, 5c, 5d, 5e, 5f and the reference map 1.

However, each map segment 5a, 5b, 5c, 5d, 5e, 5f may include additional data such as names or labels or other data providing further information about the map segment 5a, 5b, 5c, 5d, 5e, 5f.

Each map segment 5a, 5b, 5c, 5d, 5e, 5f overlaps a portion of the area shown by the reference map 1. Each map segment 5a, 5b, 5c, 5d, 5e, 5f may correspond to a particular one of the buildings or areas 3a, 3b, 3c, 3d, 3e, 3f shown in Figure 1A. Alternatively, each map segment 5a, 5b, 5c, 5d, 5e, 5f may correspond to a portion of a building or area 3a, 3b, 3c, 3d, 3e, 3f shown in Figure 1A or may overlap two or more buildings or areas 3a, 3b, 3c, 3d, 3e, 3f.

The map segments 5a, 5b, 5c, 5d, 5e, 5f may also be stored as map data, in a similar fashion to the reference map 1.

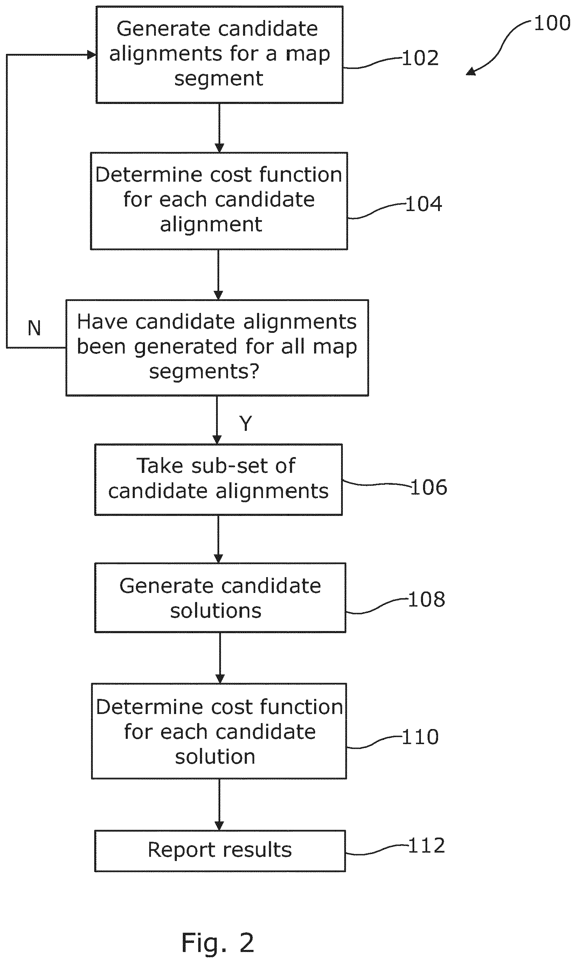

Figure 2 illustrates a flow chart of a computer implement method 100 to align map segments to a reference map to provide the placement of the map segments relative to each other in a common frame of reference, defined by the reference map 1. Figures 1C and 1D illustrate a simplified example of a reference map 1' and a pair of map segments 5a' 5b' that will be used to describe the method 100. In this example, the reference map 1' includes a single building 3' defined by a polygon 7'.

Whilst the embodiment is described with reference to a reference map 1' having a single building 3' and includes only two separate map segments 5a', 5b' it will be appreciated that any number of map segments 5a, 5b, 5c, 5d, 5e, 5f may be aligned according to any reference map 1 using the described method 100.

In a first step 102 of the method 100, each map segment 5a' 5b' is processed individually to identify candidate alignments for the map segment 5a', 13b' to the reference map 1. Each candidate alignment represents a possible placement of the map segment 5a, 5b, 5c, 5d, 5e, 5f overlapping the reference map 1.

Figure 1E shows a number of possible candidate alignments 13a′, 13aʺ, 13a‴ for the first map segment 5a' and a number of possible candidate alignments 13b′, 13bʺ, 13b‴ for the second map segment 5b'.

A number of different techniques may be used to identify each possible candidate alignment for a map segment 5a', 5b'.

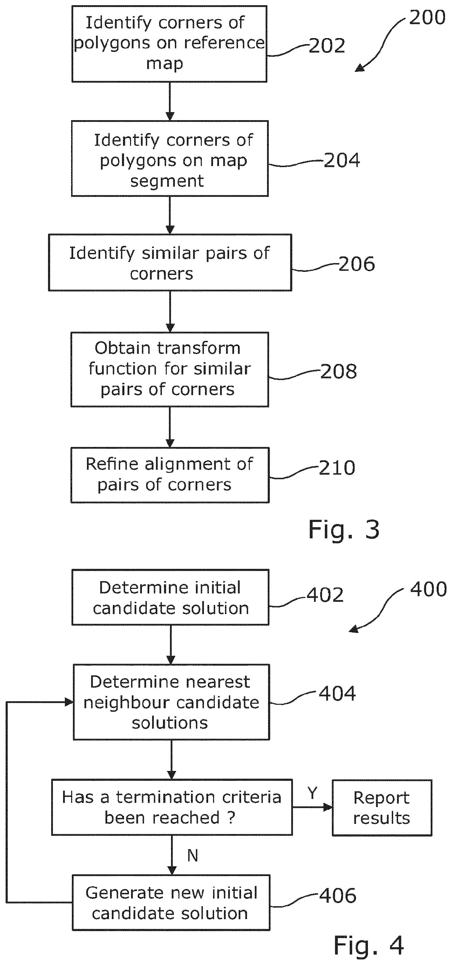

One example of a technique used to identify possible candidate alignments is a corner matching algorithm 200, as discussed in relation to Figure 3. The corner matching algorithm 200 aligns corners on the polygons 7' defined on the reference map 1' with corners on the map segments 5a', 5b'.

In a first step 202 of the corner matching algorithm 200, the corners are identified in each separate polygon 7' in the reference map 1. The corners are identified following a single rotation direction (clockwise or anti-clockwise). For each corner the location, incoming direction and outgoing direction of the joining line segments (and hence the angle of the corner) is identified. Where the reference map includes multiple polygons 7', each may be considered in turn.

In a second step 204, the corners are identified in the map segment 5a', 5b' being considered. The corners are identified following the same rotational direction as in the reference map 1', and again, the incoming direction and outgoing direction (and hence the angle of the corner) is identified. For the map segments 5a, 5b, 5c, 5d, 5e, 5f, shown in Figure 1B only the outline polygon is considered. The map segments 5a', 5b' shown in figure ID show outline polygons only.

Pairs of similar corners (one from the reference map 1', one from the map segment 5a', 5b') are then identified in a third step 206 by comparison of the identified angles. In order to be considered similar, the angle of the corner on the reference map 1 and the angle of the corner on the map segment 5a', 5b' must be within a predefined variance of each other. In one example, any corners within 10 degrees of each other may be considered similar. However, this is given by way of example only, and any suitable variance may be used.

For each pair of similar corners that have been identified, a rigid transformation is used to align the corner of the map segment 5a', 5b' to the corner of the reference map 1' (step 208).

At a next step 210, an optimisation step is used to search for the scale and rotation of the map segment 5a', 5b' that minimises the alignment cost to the reference map 1'. This is performed for each pair of similar corners that have been identified. The alignment cost is the sum or average (or another aggregate function) of squared pairwise distances of points sampled regularly around the perimeter of the segment map with the closest points in the reference map. A different error metric could be used, such as an aggregate function of distances, instead of squared distances. Distances can be scaled according to the inverse of the scale applied to the segment map so larger segment map scale factors are not penalised. The Huber Loss function could also be used so quadratic costs are aggregated for distances up to a threshold and linear costs are aggregated thereafter. Alternatively, a hard cut-off can be used to remove any influence of the surrounding geometry above a certain distance from the segment map.

It will be appreciated that step 202 of identifying the corner in the reference map 1 need only be carried out once. This can be carried out when a first map segment 5a' is processed, or before, for example as a pre-processing step.

In the above example, the step 204 of identifying the corners in the map segments 5a', 5b' is carried out when each map segment 5a', 5b' is processed. However, this may also be carried out, for some or all of the map segments, at the same time, when the first map segment 5a' is processed or as a pre-processing step.

The set of alignments generated by matching similar corners forms a set of n(i) candidate alignments mᵢ₁, mᵢ₂, mᵢ₃...mᵢₙ₍ᵢ₎. In a next step 104 of the method 100, a cost function cᵢⱼ is determined for each candidate alignment mᵢⱼ. The cost function includes at least two contributions:
- Alignment contribution: representative of how well the polygon from the map segment 5a', 5b' aligns to the polygon of the reference map 1; and
- Distortions contribution: representative of the rotation and scaling factor or other function. For example, distortion of the map segment incurs a cost.

The total cost function is the weighted sum of the contributions. The appropriate weighting of the different contributions are determined either empirically, or by training compared to known map segments forming a ground truth.

At a next step 106, a sub-set of the set n candidate alignments may be taken for each map segment 5a', 5b'. It will be appreciated that this step is optional, and may be omitted.

In one example, the subset is simply the k candidate alignments with the lowest cost function (where k is any positive integer). Alternatively, any candidate alignments with cost functions above a threshold may be removed. Alternatively, the top k% of candidate alignments with the lowest costs may be taken.

At a next step 108 a set of N candidate solutions S = {S₁, S₂,..., S_{N}} is generated. Each candidate solution comprises a single candidate alignment for each of the L map segments 5a, 5b, 5c, 5d, 5e, 5f and is thus of the form Sₖ = m₁ₓₖ₁, m₂ₓₖ₂, m₃ₓₖ₃... m_{nxkL}. Figure IF shows an example of a set of candidate solutions 15a, 15b, 15c, 15d for the placement of the two map segments 5a' 5b' on the reference map 1'.

The cost function for each candidate solution Sₖ is also determined at step 110. In one example, the cost function of each candidate solution is simply derived from the sum of the cost functions for the candidate alignment selected for each map segment 5a', 5b'.

Optionally, the cost function for the candidate solution may include pairwise contributions from the selected candidate alignments for different map segments 5a', 5b'. The pairwise contribution, for example, reflects the overlap between map segments 5a', 5b'. In most cases, such as the first three candidate solutions 15a, 15b, 15c in figure IF, overlap is undesirable. In these cases, any overlap will increase costs.

There are limited situations where overlap is encouraged and thus the resulting cost function is reduced. This includes:
- Where map segments 5a, 5b, 5c, 5d, 5e, 5f are identified as belonging to different floors of the same building;
- Where map segments are identified as explicitly including overlapping regions, but have not been merged, as will be discussed below.

In the case where there are multiple map segments 5a, 5b, 5c, 5d, 5e, 5f, the pairwise contribution may be determined for each possible pair of map segments 5a, 5b, 5c, 5d, 5e, 5f.

Alternatively, a chain or cycle model may be followed to simplify the model. In this case, the map segments 5a, 5b, 5c, 5d, 5e, 5f may be ordered and then pairwise contributions may only be considered between neighbouring map segments as ordered, such that for map segment mᵢ, the cost function of the candidate solution only includes pairwise contributions with map segments mᵢ₋₁ and mᵢ₊₁. The ordering may be based on spatial extent of the map segments, location of the map segments in the candidate solution, distinctiveness of the map segment, or any other factor. The ordering may also be arbitrary.

Optionally, where the pairwise contribution to the cost function exceeds a predefined threshold, a search may be conducted for a transformation that modifies one or both of the map segments 5a, 5b, 5c, 5d, 5e, 5f to reduce the pairwise contribution. For example, when two nearby segments have connecting corridors that nearly align but not perfectly, a small translation may be applied to align them well, thus reducing the pairwise cost among them. In an alternative example, if two segments overlap by a small amount they may be translated so that the overlap is reduced. The transformation may apply a further contribution to the cost function.

It will be appreciated that the full set of candidate solutions S that may be generated based on all possible candidate alignments may be very large, especially with a large number of map segments. According to one embodiment, a combinatorial search algorithm may be used to search for and identify the set of candidate solutions. Examples of combinatorial search algorithms include genetic algorithm, simulated annealing or tabu search. This is discussed in more detail in relation to Figure 4.

At a first step 402, an initial candidate solution S₁, and associated cost function is determined using one of the above methods. For example, the candidate solution may be the initial candidate solution S₁ having the lowest cost candidate alignment for each map segment 5a', 5b'. It will be appreciated that this may not be the lowest cost candidate solution. For example, two map segments may be located at the same place, which is not correct.

At a next step 404, a set of nearest neighbour solutions is determined.

Where there are L map segments, m₁, m₂, m₃...m_{L}, the nearest neighbour solutions are determined by changing only one of the candidate alignments of the initial candidate solution S₁ at a time, and keeping all other candidate alignments the same. This is repeated for each map segment 5a', 5b' to form a set of nearest neighbour solutions made up of different subsets within which all but one of the candidate alignments is constant.

For example, where a first map segment m₁ has candidate alignments m₁₁, m₁₂... m₁ₙ₍₁₎ and the candidate solution S₁ includes alignment m₁ₛ, there is a group of n(1)-1 nearest neighbour solutions that all have the same candidate alignments for map segments m₂, m₃...m_{L} and which have each of the possible candidate alignments for m₁.

By way of example, consider a set of three map segments with the following candidate alignments:
- Map segment 1: m₁₁, m₁₂, m₁₃, m₁₄
- Map segment 2: m₂₁, m₂₂, m₂₃, m₂₄
- Map segment 3: m₃₁, m₃₂

An initial candidate solution S₁ is determined as m₁₃, m₂₄, m₃₁. The set of nearest neighbour solutions is:
S₂ = m₁₁, m₂₄, m₃₁
S₃ = m₁₂, m₂₄, m₃₁
S₄ = m₁₄, m₂₄, m₃₁
S₅ = m₁₃, m₂₁, m₃₁
S₆ = m₁₃, m₂₂, m₃₁
S₇ = m₁₃, m₂₃, m₃₁
S₈ = m₁₃, m₂₄, m₃₂

The cost function for each new candidate solution is determined. At a next step 406, the nearest neighbour candidate solution with the lowest cost function is selected as a new initial candidate solution, and the process of determining nearest neighbours repeated for the new initial candidate solution. In other examples, the process may be repeated with two or more different initialisation candidate solutions taken from the nearest neighbour solutions that have been determined. For example, the new initial candidate solution may be: the candidate solution with lowest cost function in each subset, the candidate solutions with cost function below a threshold, the best k or k% of candidate solutions.

The process is continued until a termination criterion is met. Any suitable termination criterion may be used. For example, the process may be stopped after a threshold number of iterations, after a threshold number of candidate solutions have been generated, after a predetermined number of candidate solutions with cost function below a threshold have been generated, or by monitoring the cost function of the generated candidate solutions until no further significant improvement is seen by generating nearest neighbours. The lack of improvement may be measured over a single iteration or a number of iterations.

In a final step 110 of the method 100, the results are reported.

In one example, the single top result (with the lowest cost function) is reported. In the example shown in Figures 1C to IF, this may be the fourth candidate solution 15d. In other examples, the top k (or k%) of candidate solutions are reported, or the top cluster of results are reported.

It may be that the reported results only provide alignments for a subset of the map segments. For example, where a large number of the generated candidate solutions have the same candidate alignment for a sub-set of the map segments, only that sub-set of candidate alignments may be reported.

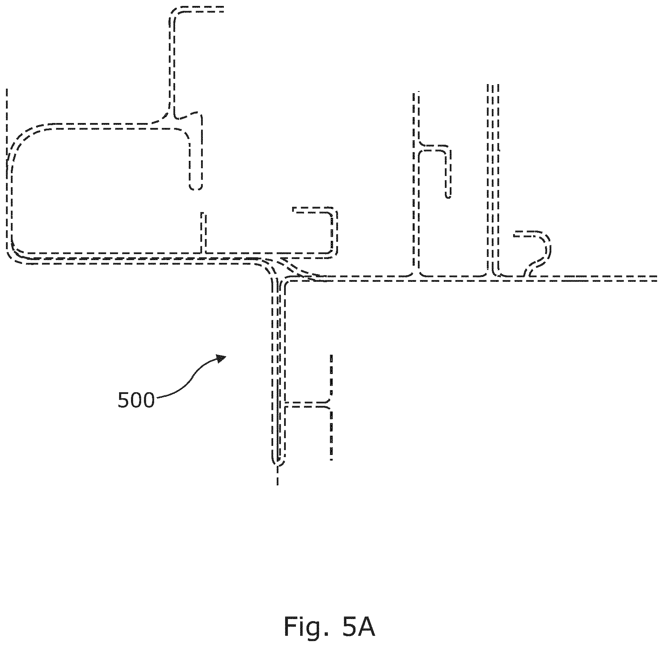

In the examples discussed above, the reference map 1 is an outline map of the area. However, this need not necessarily be the case. In other examples, the reference map may be a pose graph 500 (also referred to as an experience map) as shown in Figure 5A. The pose graph 500 shown in Figure 5A is captured in the same area as shown by the reference map 1' of Figure 1C.

A pose graph 500 is formed of one or more trajectories along which one or more mobile devices have been moved through the area. Each trajectory includes a number of nodes joined by edges. Unless stated otherwise, the method using an experience map as the reference map 1 proceeds in the same manner as discussed above.

The trajectories in the pose graph can be obtained by any suitable methods of positioning mobile devices, for example, GNSS data may be used. Alternatively, where GNSS data is not available, techniques such as pedestrian dead reckoning and other inertial measurement techniques may be used. Relocalisation techniques (based on sensor signals, e.g. Wifi, geomagnetic field, visual appearance and others) can be used to determine the relative pose between two nodes in the graph. This can be used to either perform loop closure of the trajectory of a single user, or connect trajectories of different users.

Where the reference map is an outline map, the outline of the map segments 5a, 5b, 5c, 5d, 5e, 5f are aligned to the outline of the polygons/shapes on the reference map 1. When the reference map 1 is a pose graph/experience map, this is not possible. Therefore, the corner matching algorithm discussed above is not applicable.

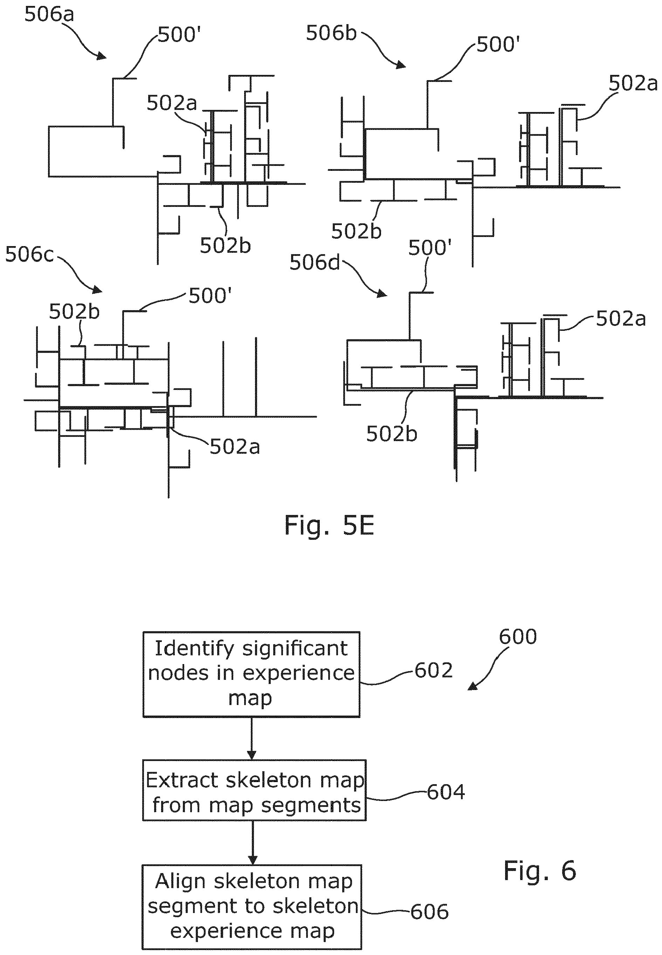

In the case of an experience map as the reference map 1, alternative techniques may be used. For example, anchor matching techniques may be used. Figure 6 illustrates a method for anchor matching between an experience reference map and a map segment.

In a first step 602, a simplified (or skeleton) pose graph 500' is extracted from the pose graph 500. This maintains the structure of the original pose graph 500 but highlights significant or landmark features. Graph sparsification approaches can be used for this step, in which the original pose graph is processed to return a sparsified graph that approximately preserves some characteristics of the original pose graph 500

Nodes are created in places where there is sufficiently large density of nodes in the original pose graph, i.e. only along frequently used corridors; two nodes v and u in the new graph are connected via an edge if they are sufficiently close to each other, and if there is a sufficient number of short paths connecting original nodes in the pose graph close to v with nodes in the original pose graph close to u.

Other graph sparsification methods could be used to infer the a skeleton experience map that represents the main corridors or pathways followed by mobile device users from a detailed input pose graph generated from processing individual trajectories.

Other significant points (or anchor points) that may be identified and included in the skeleton experience map 500' include, for example, nodes with degree greater than two (i.e. where more than two edges meet) and nodes with degree of two but an angle above a threshold (i.e. a corner).

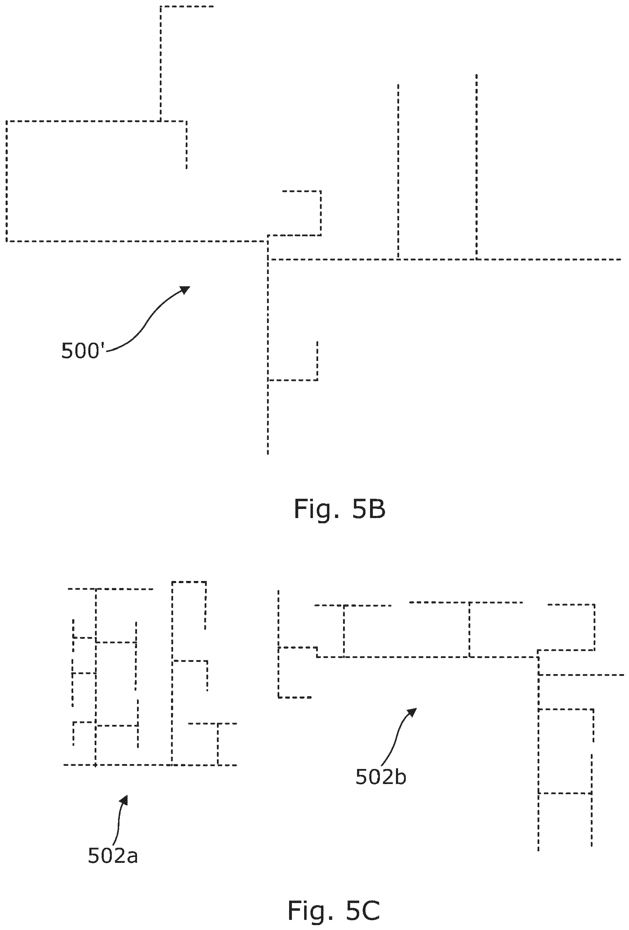

Figure 5B shows a skeleton experience map 500' extracted from the pose graph 500.

Skeleton segments 502a, 502b are also extracted from the map segments 5a', 5b', as they are processed, in step 604.

Any suitable skeletonization approach may be adopted for extracting the skeleton from the map segments 5a', 5b'. In one example, the map segment comprises wall defining rooms and other areas. The map may be inverted to highlight the traversable areas, and then the areas defining traversable areas are thinned to provide a skeleton. The thinning maintains all connection between traversable regions.

It will be appreciated that in one example, any non-traversable regions (e.g. rooms with no doorway) will be treated in the same way as walls.

Furthermore, where a map segment includes two or more unconnected regions of traversable space, both regions may be maintained, or only the largest region(s) may be considered. In alternative examples, the unconnected traversable spaces may be treated as separate map segments.

It will be appreciated that, optionally, any traversable regions on the exterior of the building may be removed from the map segment. Furthermore, optionally, the skeleton of the map segment may be simplified, for example by smoothing, reducing the number of nodes (by sampling), or removing nodes only connected to one adjacent node.

Figure 5C shows an example of skeleton segments 502a, 502b extracted from the map segments 5a', 5b' shown in Figure ID. As with the skeleton pose graph, this maintains the structure of the original map segment 5a', 5b' but highlights significant or landmark features.

The skeleton pose graph 500' and map segments 502a, 502b are then converted to graph data comprising nodes joined by edges, if not already in this format. The nodes form anchor points that can be used for aligning the map segments 502a, 502b to the pose graph 500'. Each anchor includes a location and an angle for the outgoing edge(s).

It will be appreciated that the segment skeletons 502a, 502b correspond to the corridors and/or empty spaces and so the skeleton experience map 500' should align to the skeleton segments 502a, 502b. This will be discussed in more detail below.

At a next step 606, the anchors of each map segment 502a, 502b are matched in turn. This is in a similar manner to the corner matching discussed above, and is performed by pairwise matching of anchors. As with the corner matching, pairs of similar anchors are identified, based on an acceptable variance between anchors in the map segment 520a, 502b and anchors in the pose graph 500'. For each pair, a rigid transformation of the skeleton map segment 502a, 502b is determined to align the anchors, and an optimisation step is used to determine the scaling and rotation.

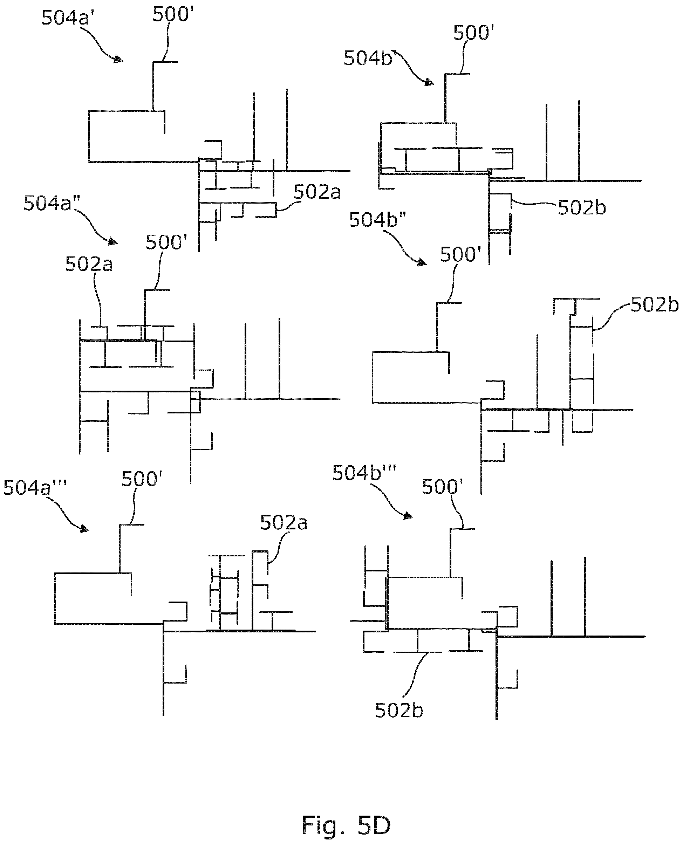

Figure 5D shows examples 504a′, 504aʺ, 504a‴, 504b′, 504bʺ, 504b‴ of the alignment of the skeleton map segments 502a, 502b as determined by this method.

There are a number of different ways to evaluate the cost function of candidate alignments derived by the anchor matching algorithm 600.

In one example, the distances between the nodes in the map segment and the nearest sample point in the reference map are determined. A statistic on these distances could be used to estimate alignment cost (e.g. mean of squared distances, or sum of squared distances, or mean/sum of distances or a metric based on distances passed through the Huber loss function).

In another example, distances could be evaluated based on the perpendicular distance from a node in the map segment to the closest edge in the reference map. The impact of distances on error contribution may be dampened or accentuated by appropriate weighting. The size of edges (linked to the density of nodes) may also be taken into account in estimating the alignment cost.

In a similar manner to the method discussed in relation to Figure 2, the individual candidate alignments may then be used to determine candidate solutions, and the results reported. Figure 5E illustrates candidate solutions 506a, 506b, 506c, 506d generated according to this method.

The spatial relationship between the map segment 5a', 5b' and the corresponding skeleton segment 502a, 502b is known. Therefore, once the skeleton segment 502am 502b has been provided in a position, the full detail of the map segment may be reintroduced to provide the desired result.

Furthermore, although the example discussed above relates to the use of a pose graph with only a pair of map segments, the reference pose graph 500 may be of any size, and there may be any number of segments.

The corner matching and anchor matching algorithms discussed above could be implemented using any graph or shape matching algorithm capable of identifying candidate alignment positions of the segment map on the reference map, and estimating a metric of similarity for each candidate alignment.

Prior to the step 102 of processing each map segment 5a, 5b, 5c, 5d, 5e, 5f individually to identify candidate alignments for the map segment 5a, 5b, 5c, 5d, 5e, 5f to the reference map 1 the map segments 5a, 5b, 5c, 5d, 5e, 5f and/or reference map 1 may undergo certain pre-processing steps in order to simplify the maps and alignment process and/or rationalise the maps 1.

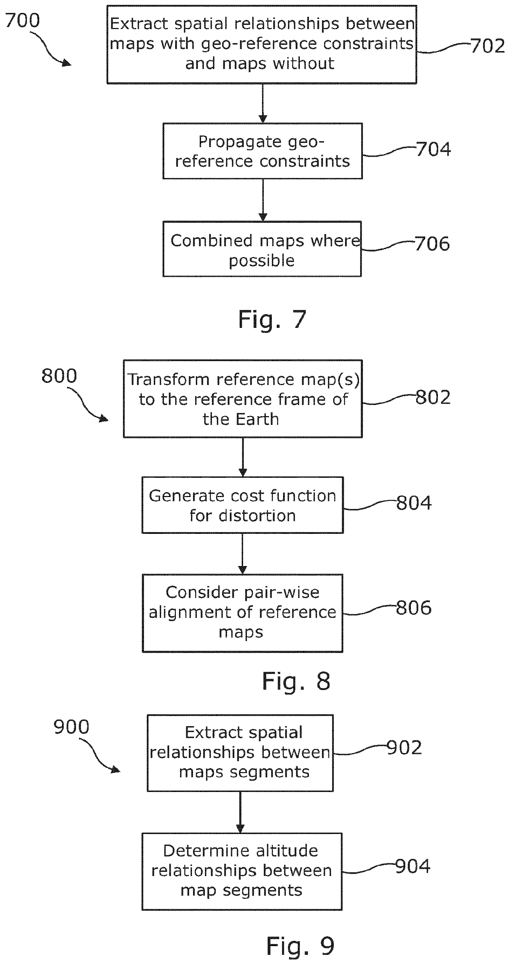

Figure 7 illustrates a first pre-processing procedure 700 for pre-processing of the reference map 1 (whether outline map or experience map).

In a first step 702, spatial relationships are extracted between maps with geo-reference constraints (for example GNSS constraints) and maps without such constraints. The maps without such constraints may be other outline maps or may be map segments 5a, 5b, 5c, 5d, 5e, 5f. Corner matching, anchor matching or other graph or shape matching algorithms can be used to determine if there are unique alignments with very high similarity (fit), in which case the maps can be inferred to have a spatial relationship with high confidence, inversely proportional to the alignment cost.

In a second step 704, where spatial relationships have been identified between maps with geo-reference constraints (for example GNSS constraints) and maps without such constraints, the geo-referenced constraints are propagated onto the map without constraints.

For example, where a significant overlap is determined between a map with geo-reference constraints and a map without, and the geo-reference constraints are applicable to a point (or points) within the overlap region, the geo-reference constraint may simply be applied to the corresponding point on the other map.

Alternatively, where the geo-reference constraints are outside of the overlap region, they may be used to infer geo-referencing constraints indirectly.

Optionally, in step 706, the maps determined to have spatial relationships may be combined into a single map. This may form a single map segment 5a, 5b, 5c, 5d, 5e, 5f or a single reference map 1.

Figure 8 illustrates a further optional pre-processing procedure 800 that is performed on the reference map(s) (whether outline map or experience map).

In a first step 802, the reference map is processed to transform the geo-reference constraints (original or propagated) into a transformed map expressed in the Earth's reference frame.

Where a reference map includes multiple geo-referenced constraints, transformation into the Earth's reference frame may cause distortion of the map. For example, on a reference map, the pose graph or building outline may have a partial shape, however, transformation into the Earth's reference frame based on GNSS data may cause a distortion of the shape. This may be due to errors in GNSS data or experience maps.

A separate cost function is generated for the distortion in step 804. A first contribution is related to the distortion required whilst a second contribution is related to the consistency of the geo-reference constraints. Therefore, where a map requires high distortion to maintain the geo-reference constraints a balance is struck between the two contributions. This balance can be resolved using a non-linear optimisation algorithm, such as the backend of a SLAM (simultaneous localisation and mapping) system with GNSS constraints causing displacement of the original poses (this displacement being a measure of the distortion) and the optimised graph still not fully satisfying all GNSS constraints (with residuals from these constraints being a measure of the consistency of the geo-reference constraints).

In a further optional step 806, where there are multiple geo-referenced maps, the pairwise alignment of different pairs of maps is further used to iteratively refine the maps.

First, an order of the reference maps is determined. This may be, for example, by extent of overlap, or an arbitrary order.

The first map in the order is then aligned to the second map, and the transformation optimised to align the two maps, the second map is then aligned to the third map, and the process repeated to the last map. This may be a single linear process, or it may be cyclic with the last map aligned to the first map.

Where multiple reference maps 1 are available, a single one is chosen based on the cost functions determined above. Alternatively, the reference map with the largest extent may be chosen, or the reference map with the most/most accurate geo-reference data.

Where a reference map does not include geo-referenced data, one of the maps may arbitrarily be selected to define the reference map. For example, it may be the map with the largest extent.

Figure 9 illustrates a procedure 900 for pre-processing the map segments 5a, 5b, 5c, 5d, 5e, 5f without georeferenced data. At a first step 902, spatial relationships between map segments 5a, 5b, 5c, 5d, 5e, 5f are determined. For example, where map segments 5a, 5b, 5c, 5d, 5e, 5f have a high degree of overlap, due to close matching.

At the next step 904, the altitude relationship of the pairs of maps with high correlation (i.e. large overlap) is determined.

Where the maps are determined to be at the same altitude, the map segments may be merged to form a combined segment that is treated as a single map segment for the purpose of the method discussed in relation to Figure 2.

Where the altitude information is different, it is determined that, for example, the map segments may relate to different floors of the same building.

The altitude information may be determined in any suitable way. For example, if the map segments are labelled with floor identifiers, or other information associated with the map, such as pressure readings altitude readings and the like.

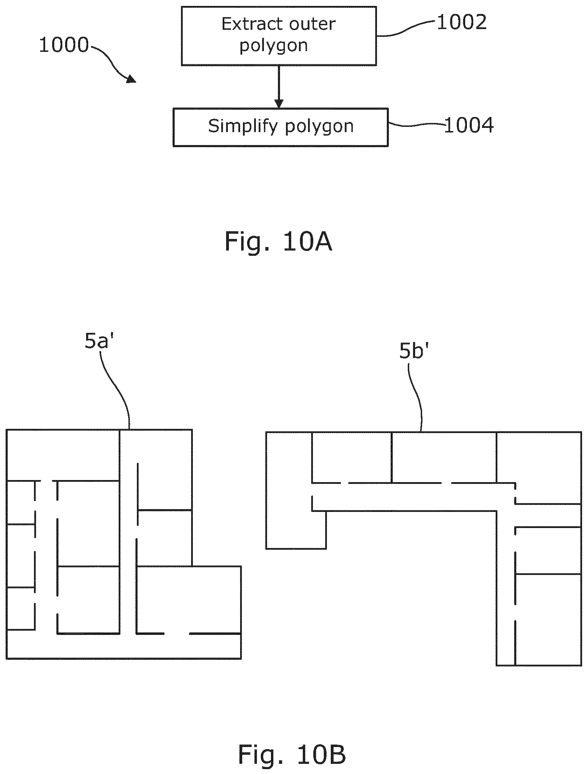

Furthermore, in an additional optional pre-processing step, the map segments 5 may be simplified for processing. Figure 10A illustrates a method 1000 for simplifying the map segments.

Figure 10B illustrates the map segments 5a', 5b' shown in Figure ID. In this example, the map segments 5a', 5b' include detailed floor plans of the interior of the area shown by the map segment 5a', 5b'.

At a first step 1002, the outline polygon of the map segment may be extracted. This is as then shown in Figure ID.

In the example shown in Figures 10B and 10D, the outline polygon of the map segment is relatively simple in shape. However, this may not always be the case, and the outline polygon may include Small features and artefacts. Optionally, at a second step 1004, the polygon may be simplified by sampling the outline around the circumference of the polygon. The sampling rate is sufficiently low to remove small features from the outside, but sufficiently high to retain the general shape of the polygon. Other polygon simplification or sparsification methods, could be applied that take a polygon or polyhedron p, with n vertices, as input, and return a modified one that retains at least a certain level of similarity with the original one, but with fewer vertices.

Either the outline polygon or the simplified outline polygon is used in the alignment process. At the end of the process, the simplified polygon is replaced with the detailed map segment 5a', 5b' to provide the full detail map.

It will also be appreciated that the detailed map segments 5a', 5b' shown in Figure 10B are used to generate the skeleton segment 502a, 502b when using a pose graph as the reference graph.

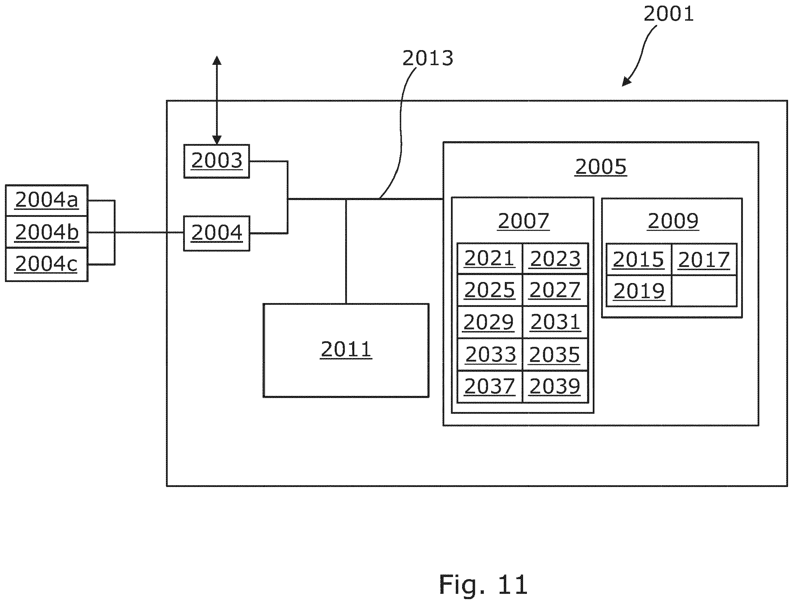

Figure 11 schematically illustrates an example of the data processing system 2001 for performing the methods discussed above. The data processing system 2001 includes a communications interface 2003, arranged to receive data including, but not limited to, map data corresponding to one or more reference maps 1 or map segments 5a, 5b, 5c, 5d, 5e, 5f and data transferred from one or more mobile devices 101 to form trajectory data as discussed in relation to Figure 5. The results of the processing may also be provided over the communications interface 2003.

The data processing system 2001 may also include aw user input/output interface 2004 to enable a user to input data or augment previously provided data, and also to provide a visual output of the results. The input/output interface may be connected to one or more input/ output device 2004a, 2004b, 2004c, such as a touch screen, a display, a keyboard, a mouse and the like.

The data processing system 2001 includes a memory 2005, subdivided into a program storage portion 2007 and a data storage portion 2009, and processing circuitry 2011.

The processing circuitry 211, memory 205, input/output interface 2004 and communications interface 203 are all in communication over a system bus 2013. The processing circuitry 2011, input/output interface 2004 and memory 2005 may further be in communication via the communications interface 2003, where the functionality of the memory 2005 and processing circuitry 2011 is distributed.

The memory may be provided by a cache memory, RAM, a local mass storage device such as the hard disk. The memory may also be provided remotely, and connected to the processing circuitry 2011 over a network connection.

The processing circuitry 2011 may be or comprise one or more of the following processors: A7, A8, A9, A10 or A11 processors from Apple^{®}, Snapdragon, an Intel^{®} X86 processor such as an 15, 17 processor, an Intel Atom, or the likes.

The data storage portion 2009 stores map data 2015 encoding maps 1 of one or more areas. This may include reference maps and map segments. The data storage portion 2009 is also arranged to store the data 2017 received from one or more mobile devices forming pose graphs, and output data 2019 that is the result of the processing of the map data 2015 and/or pose graphs.

The data processing system 2001 is arranged to process the map data 2015, 2017 as discussed above. The program storage portion 2007 of the memory 2005 contains a number of modules 2021, 2023 ,2025 ,2027, 2029 ,2031, 2033, 2035, 2037, 2039 which perform various parts of the processing. The modules contain computer program code that, when executed on the processing circuitry 2011, causes certain steps to occur.

A corner matching module 2021 and anchor matching module 2031 perform the corner and anchor matching processed discussed above. A candidate alignment module 2023 is provided to determine candidate alignments for individual map segments (using a map or pose graph as the reference) and a candidate solution module 2027 identifies and searches candidate solutions based on the identified candidate alignments.

A skeleton generation module 2029 generates skeleton maps and map segments where necessary, whilst an outline extraction module 2039 generates outlines of map segments (and simplifies the outline where necessary).

A reference map constrain propagation module 2035 performs the pre-processing discussed in relation to Figure 7, whilst a constraint transformation module 2037 performs the pre-processing discussed in relation to Figure 8.

A map segment pre-processing module 2037 identifies spatial relationship and other relationships (such as altitude relationships) between map segments, as discussed in relation to Figure 9.

The data processing system 2001 discussed above is given by way of example only. Any suitable data processing system 2001 may be used.

In the above description, none of the map segments 5a, 5b, 5c, 5d, 5e, 5f have any geo-referenced data. However, this need not necessarily be the case. In some cases, map segments may include GNSS or other reference data in the same frame of reference as the reference map 1, allowing these segments to be aligned with high confidence.

In the above description, corner matching or anchor matching algorithms are used to find candidate alignments of map segments 5a, 5b, 5c, 5d, 5e, 5f to the reference map 1. However, it will be appreciated that any suitable shape matching algorithm may be used.

## Claims

1. A computer implemented method (100) of aligning a plurality of map segments (5a, 5a', 5b, 5b', 5c, 5d, 5e, 5f, 502a, 502b) having a local reference frame to a reference map (1, 1', 500) having a global reference frame, each map segment (5a, 5a', 5b, 5b', 5c, 5d, 5e, 5f, 502a, 502b) overlapping a portion of the area represented by the reference map, the method (100) comprising:
for each map segment (5a, 5a', 5b, 5b', 5c, 5d, 5e, 5f, 502a, 502b), independently generating (102) one or more candidate alignments (13a′, 13aʺ, 13a‴, 13b′, 13bʺ, 13b‴, 504a′, 504aʺ, 504a‴, 504b′, 504bʺ, 504b‴) aligning the map segment (5a, 5a', 5b, 5b', 5c, 5d, 5e, 5f, 502a, 502b) to the reference map (1, 1', 500);
for each candidate alignment (13a′, 13aʺ, 13a‴, 13b′, 13bʺ, 13b‴, 504a′, 504aʺ, 504a‴, 504b′, 504bʺ, 504b‴), evaluating (104) a candidate alignment cost function representing the likelihood that the candidate alignment (13a′, 13aʺ, 13a‴, 13b′, 13bʺ, 13b‴, 504a′, 504aʺ, 504a‴, 504b′, 504bʺ, 504b‴) is correct;
based on the candidate alignments (13a′, 13aʺ, 13a‴, 13b′, 13bʺ, 13b‴, 504a′, 504aʺ, 504a‴, 504b′, 504bʺ, 504b‴) and associated candidate alignment cost functions, generating (108) one or more candidate solutions (15a, 15b, 15c, 15d, 506a, 506b, 506c, 506d), each candidate solution (15a, 15b, 15c, 15d, 506a, 506b, 506c, 506d) comprising a single candidate alignment (13a′, 13aʺ, 13a‴, 13b′, 13bʺ, 13b‴, 504a′, 504aʺ, 504a‴, 504b′, 504bʺ, 504b‴) for each map segment ( 5a, 5a', 5b, 5b', 5c, 5d, 5e, 5f, 502a, 502b) of the plurality of map segments ( 5a, 5a', 5b, 5b', 5c, 5d, 5e, 5f, 502a, 502b);
for each candidate solution (15a, 15b, 15c, 15d, 506a, 506b, 506c, 506d), evaluating (110) a candidate solution cost function based on at least the candidate alignment cost functions for each candidate alignment (13a', 13a", 13a‴, 13b', 13b", 13b‴, 504a', 504a", 504a‴, 504b', 504b", 504b‴) included in the candidate solution (15a, 15b, 15c, 15d, 506a, 506b, 506c, 506d); and
based on the evaluation of the candidate solution cost functions, determining the alignment of the plurality of map segments (5a, 5a', 5b, 5b', 5c, 5d, 5e, 5f, 502a, 502b) to the reference map (1, 1', 500).

2. The computer implemented method (100) of claim 1, wherein at least some of the plurality of map segments (5a, 5a', 5b, 5b', 5c, 5d, 5e, 5f, 502a, 502b) have different reference frames.

3. The computer implemented method (100) of claim 1 or claim 2, wherein independently generating (102) one or more candidate alignments (13a', 13a", 13a‴, 13b', 13b", 13b‴, 504a', 504a", 504a‴, 504b', 504b", 504b‴) for each map segment (5a, 5a', 5b, 5b', 5c, 5d, 5e, 5f, 502a, 502b) comprises:
aligning one or more node points or edges on the map segment (5a, 5a', 5b, 5b', 5c, 5d, 5e, 5f, 502a, 502b) with one or more node points or edges on the reference map (1, 1', 500); and optionally
applying one or more of a shape matching algorithm or a graph matching algorithm.

4. The computer implemented method (100) of claim 3, wherein evaluating (104) a candidate alignment cost function for each candidate alignment (13a', 13a", 13a‴, 13b', 13b", 13b‴, 504a', 504a", 504a‴, 504b', 504b", 504b‴) comprises:
determining a degree of alignment between node points and edges on the map segment (5a, 5a', 5b, 5b', 5c, 5d, 5e, 5f, 502a, 502b) and node points and edges on the reference map(1, 1', 500); and
determining the cost function based on the determined degree of alignment.

5. The computer implemented method (100) of any preceding claim, wherein independently generating one or more candidate alignments (13a', 13a", 13a‴, 13b', 13b", 13b‴, 504a', 504a", 504a‴, 504b', 504b", 504b‴) for each map segment (5a, 5a', 5b, 5b', 5c, 5d, 5e, 5f, 502a, 502b) comprises applying a transformation to distort to the map segment (5a, 5a', 5b, 5b', 5c, 5d, 5e, 5f, 502a, 502b), wherein optionally evaluating a candidate alignment cost function for each candidate alignment (13a', 13a", 13a‴, 13b', 13b", 13b‴, 504a', 504a", 504a‴, 504b', 504b", 504b‴) comprises: determining a cost function contribution corresponding to a distortion of the map segment (5a, 5a', 5b, 5b', 5c, 5d, 5e, 5f, 502a, 502b) in the candidate alignment (13a', 13a", 13a‴, 13b', 13b", 13b‴, 504a', 504a", 504a‴, 504b', 504b", 504b‴) and/or optionally wherein the transformation applies a scaling.

6. The computer implemented method (100) of any preceding claim, wherein generating (108) one or more candidate solutions (15a, 15b, 15c, 15d, 506a, 506b, 506c, 506d) comprises one or more of:
ignoring candidate alignments (13a', 13a", 13a‴, 13b', 13b", 13b‴, 504a', 504a", 504a‴, 504b', 504b", 504b‴) of map segments (5a, 5a', 5b, 5b', 5c, 5d, 5e, 5f, 502a, 502b) with a cost function value exceeding a threshold; and
identifying a sub-set of all possible combinations of the candidate alignments (13a', 13a", 13a‴, 13b', 13b", 13b‴, 504a', 504a", 504a‴, 504b', 504b", 504b‴).

7. The computer implemented method (100) of any preceding claim, wherein evaluating (110) a candidate solution cost function for each candidate solution (15a, 15b, 15c, 15d, 506a, 506b, 506c, 506d) comprises determining an overlap of different map segments (5a, 5a', 5b, 5b', 5c, 5d, 5e, 5f, 502a, 502b) and determining a cost function contribution based on the overlap.

8. The computer implemented method (100) of claim 7, wherein generating (108) one or more candidate solutions (15a, 15b, 15c, 15d, 506a, 506b, 506c, 506d) comprises:
identifying a first candidate solution;
identifying further candidate solutions (15a, 15b, 15c, 15d, 506a, 506b, 506c, 506d) based on the first candidate solution, which identification optionally comprises
using a discrete global optimisation algorithm, such as genetic algorithms, simulated annealing, tabu search; and/or
changing a sub-set of the candidate alignments (13a', 13a", 13a‴, 13b', 13b", 13b‴, 504a', 504a", 504a‴, 504b', 504b", 504b‴) in the first candidate solution for different candidate alignments (13a', 13a", 13a‴, 13b', 13b", 13b‴, 504a', 504a", 504a‴, 504b', 504b", 504b‴) for the same map segment (5a, 5a', 5b, 5b', 5c, 5d, 5e, 5f, 502a, 502b).

9. The computer implemented method (100) of claim 8, wherein the candidate alignments (13a', 13a", 13a‴, 13b', 13b", 13b‴, 504a', 504a", 504a‴, 504b', 504b", 504b‴) with the highest cost function are changed.

10. The computer implemented method (100) of any of claims 8 and 9, the method further comprising one or more of:
the step of generating (108) one or more candidate solutions (15a, 15b, 15c, 15d, 506a, 506b, 506c, 506d) is terminated once a termination criteria is met, wherein any suitable termination criteria may be used; and
optionally the first candidate solution (15a, 15b, 15c, 15d, 506a, 506b, 506c, 506d) comprises the candidate alignment (13a', 13a", 13a‴, 13b', 13b", 13b‴, 504a', 504a", 504a‴, 504b', 504b", 504b‴) with the lowest value cost function for each map segment (5a, 5a', 5b, 5b', 5c, 5d, 5e, 5f, 502a, 502b).

11. The computer implemented method (100) of any preceding claim, comprising one or more of:
simplifying the shape of map segments (5a, 5a', 5b, 5b', 5c, 5d, 5e, 5f, 502a, 502b) prior to determining candidate alignments (13a', 13a", 13a‴, 13b', 13b", 13b‴, 504a', 504a", 504a‴, 504b', 504b", 504b‴); and
determining that one or more map segments (5a, 5a', 5b, 5b', 5c, 5d, 5e, 5f, 502a, 502b) overlap and merging overlapping map segments to form a single map segment.

12. The computer implement method (100) of any preceding claim, comprising transforming two or more reference maps (1, 1', 500) to align to each other in a single global frame of reference.

13. The computer implemented method (100) of any preceding claim, wherein determining the alignment of the plurality of map segments (5a, 5a', 5b, 5b', 5c, 5d, 5e, 5f, 502a, 502b) to the reference map (1, 1', 500) comprises one or more of:
providing a sub-set of the candidate solutions (15a, 15b, 15c, 15d, 506a, 506b, 506c, 506d) having the lowest cost function value; and
aligning some but not all of the map segments (5a, 5a', 5b, 5b', 5c, 5d, 5e, 5f, 502a, 502b) to the reference map (1, 1', 500); and
wherein optionally the reference map (1, 1', 500) comprises a map with one or more points having a position defined in a Global Navigation Satellite System or a pose graph (500) of trajectories along which one or more mobile devices is moved.

14. A data processing system (2001) for aligning a plurality of map segments (5a, 5a', 5b, 5b', 5c, 5d, 5e, 5f, 502a, 502b) having a local reference frame to a reference map (1, 1', 500) having a global reference frame, each map segment (5a, 5a', 5b, 5b', 5c, 5d, 5e, 5f, 502a, 502b) overlapping a portion of the area represented by the reference map (1, 1', 500), the data processing system (2001) comprising:
processing circuitry (2011) arranged to perform the method of any preceding claim.

15. A computer-readable medium containing instructions which, when run on a system including processing circuitry (2011), cause that system to:
(i) perform the method of any of claims 1 to 13; and/or
(ii) implement the data processing system of claim 14.
